# EUROPÄISCHE PATENTSCHRIFT

(11) **EP 0 432 515 B1**
(45) Veröffentlichungstag und Bekanntmachung des Hinweises auf die Patenterteilung: **08.09.1993**
(21) Anmeldenummer: 90122023.6
(22) Anmeldetag: 17.11.1990
(51) Int. Cl.: B62B 3/10

(54) **Einkaufswagen**
Shopping trolley
Chariot à provisions

(30) Priorität: 15.12.1989 DE 8914744 U
(43) Veröffentlichungstag der Anmeldung: 19.06.1991
(73) Patentinhaber: Wanzl GmbH & Co. Entwicklungs-KG, D-89336 Leipheim (DE)
(72) Erfinder: Rudolf Wanzl, W-8874 Leipheim (DE); Johann Schmid, W-8949 Derndorf (DE)

(56) Entgegenhaltungen:
- DE-A- 3 007 528
- DE-U- 8 105 605
- FR-A- 2 314 854

## Beschreibung

Die Erfindung betrifft einen Einkaufswagen mit einem sich in Schieberichtung verjüngenden, mit vier Fahrrollen ausgestatteten Fahrgestell, das einen Bodenrost trägt und über dem Bodenrost ein mit dem Fahrgestell ortsfest verbundener Korb vorgesehen ist, der eine in das Korbinnere verschwenkbare Rückwand aufweist und das Fahrgestell, der Bodenrost sowie der Korb so gestaltet sind, daß sich gleiche Einkaufswagen platzsparend ineinanderschieben lassen und bei dem die vorderen Fahrrollen an zwei im vorderen Bereich des Fahrgestelles angeordneten und mit der Stirnseite oder den Längsseiten des Fahrgestelles verbundenen Tragteilen mit Hilfe von Sicherungsmitteln lösbar befestigt sind, wobei die zwischen den Tragteilen hindurchgeführten Sicherungsmittel mit ihrem Kopf an den Tragteilen aufliegen und wobei der mit seiner hinteren Begrenzung auf dem Fahrgestell aufliegende Bodenrost im vorderen Bereich des Fahrgestelles so gelagert ist, daß er sich um eine quer zur Schieberichtung angeordnete waagrechte Achse verschwenken läßt.

Bei einem bekannten Einkaufswagen dieser Art wird der Bodenrost im vorderen Bereich des Fahrgestelles derart verschwenkbar befestigt, daß zwei in Schieberichtung des Einkaufswagens weisende Stäbe des Bodenrostes schlaufenartig um einen der beiden die vorderen Fahrrollen tragenden Querstege herumgebogen werden. Diese an sich simple Befestigungsweise besitzt den Nachteil, daß beim Fahren des Einkaufswagens, bedingt durch die gegenseitige metallische Auflage der Stäbe und der Querstege, lästige Klappergeräusche entstehen. Darüberhinaus sind bei diesen Einkaufswagen getrennte Montagegänge für den Bodenrost und für die vorderen Fahrrollen erforderlich. Während der Bodenrost durch Bildung von Schlaufen am Fahrgestell befestigt wird, müssen die vorderen Fahrrollen in einem gesonderten Montageabschnitt mit Hilfe von Sicherungsmitteln an den Querstegen befestigt werden.

Die Aufgabe der Erfindung besteht darin, einen gattungsgemäßen Einkaufswagen so weiterzuentwickeln, daß nicht nur eine Reduzierung der Klappergeräusche, die durch den Bodenrost bewirkt werden, erreicht wird, sondern daß gleichzeitig eine Verringerung der Montagezeit erzielbar ist, die für die Befestigung des Bodenrostes und der vorderen Fahrrollen am Fahrgestell erforderlich ist.

Die Aufgabe ist erfindungsgemäß dadurch gelöst, daß zwei mit je einer Öffnung zur Aufnahme eines Teils des Bodenrostes ausgestattete, aus geräuschdämpfendem Werkstoff gefertigte Halteteile zwischen die Tragteile eingefügt sind und jedes Halteteil eine Anlagefläche für einen Teil des Kopfes eines Sicherungsmittels aufweist und daß in montiertem Zustand der Fahrrollen jedes Halteteil zwischen dem Kopf eines Sicherungsmittels und zwischen einem oder zwei Tragteilen eingespannt ist.

Nun ist wohl durch das deutsche Gebrauchsmuster G 81 05 605.2 ein Einkaufswagen bekannt, bei dem im vorderen Bereich des Fahrgestelles aus Kunststoff gefertigte Halteteile zur schwenkbaren Lagerung des Bodenrostes vorgesehen sind, wodurch eine Reduzierung von Klappergeräuschen erzielt wird. Allerdings vermittelt dieses Gebrauchsmuster weder einen Hinweis darüber, wie die Halteteile an Tragteilen entsprechend des gattungsgemäßen Einkaufswagens anzuordnen wären, noch findet man Angaben darüber, wie auf den gattungsgemäßen Einkaufswagen übertragen eine Verringerung der Montagezeiten für den Bodenrost und für die vorderen Fahrrollen zu erzielen wäre.
Gleiches gilt auch für einen von der Anmelderin entwickelten Einkaufswagen, der im vorderen Bereich seines Fahrgestelles an beiden Längsseiten je einen V-förmigen Halter aufweist, in welchen Halteteile zur schwenkbaren Lagerung des Bodenrostes eingefügt sind. Auch hier vermißt man Lösungsvorschläge, die auf die Befestigung der Halteteile an den Tragteilen hinzielen könnten.

Der Vorteil der Erfindung läßt sich sehr gut anhand der Schilderung des Montageablaufes aufzeigen. Die Halteelemente werden einfach auf zwei dafür vorgesehene freie Drahtenden des Bodenrostes aufgesteckt. Anschließend werden die Halteteile zwischen die Tragteile des Fahrgestelles eingefügt. Sodann werden die vorderen Fahrrollen angeschraubt, wobei die Köpfe der Sicherungsmittel die Halteteile mit den Tragteilen verspannen. Die Befestigung der vorderen Fahrrollen bewirkt somit gleichzeitig die Befestigung und damit die schwenkbare und geräuscharme Lagerung des Bodenrostes. Dadurch wird eine erhebliche Reduzierung der für den Bodenrost und die Fahrrollen erforderlichen Montagezeit erzielt.

Die Erfindung wird anhand eines Ausführungsbeispieles näher erläutert. Es zeigt
- Fig. 1: einen Einkaufswagen mit Halteteilen und Bodenrost;
- Fig. 2: ein Halteteil in räumlicher Darstellung;
- Fig. 3: im Detail den vorderen Bereich des Fahrgestelles mit einem Teil des Bodenrostes, mit einem Halteteil und mit einer Fahrrolle;
- Fig. 4: gemäß einer Variante einen Teil des vorderen Bereiches des Fahrgestelles mit einem Halteteil und mit einem Teil des Bodenrostes sowie
- Fig. 5: ein Halteteil entsprechend der Ausführung nach Fig. 4.

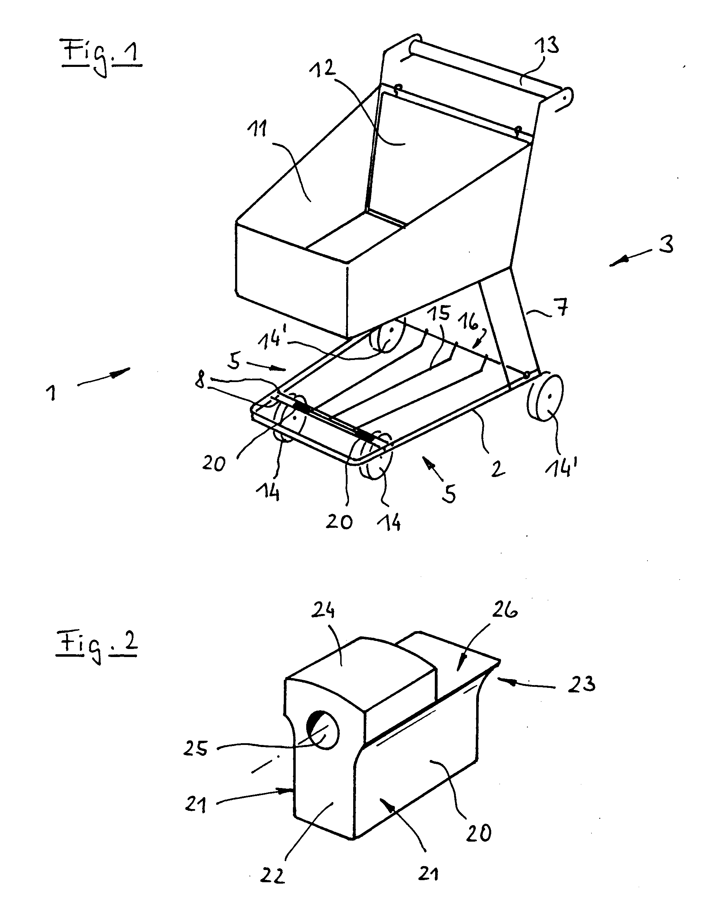

Der in Fig. 1 dargestellte Einkaufswagen 1 weist in üblicher Weise ein trapezförmiges Fahrgestell 2 auf, dessen längere parallele Seite fehlt. Am rückwärtigen Ende 3 des Fahrgestelles 2 streben Träger 7 nach oben, die einen Behälter in Form eines Korbes 11 tragen. Sowohl das Fahrgestell 2, als auch der Korb 11 verjüngen sich in Schieberichtung des Einkaufswagens 1, wobei die Rückwand 12 des Korbes 11 in bekannter Weise durch eine Klappe gebildet ist, die sich zum Zwecke des Ineinanderschiebens zweier Einkaufswagen 1 in das Korbinnere verschwenken läßt. Am oberen rückwärtigen Ende des Korbes 11 befindet sich eine Schiebeeinrichtung 13 in Form eines Handgriffes. Das Fahrgestell 2 weist vier Fahrrollen 14, 14' auf, wobei die beiden vorderen Fahrrollen 14 in an sich bekannter Weise an zwei stabförmigen Tragteilen 8 befestigt sind, die die beiden Längsseiten 5 des Fahrgestelles 2 miteinander verbinden. Zwischen den Tragteilen 8 sind auf Höhe der vorderen Fahrrollen 14 zwei Halteteile 20 eingefügt, die zur schwenkbaren Aufnahme des Bodenrostes 15 bestimmt sind. Der Bodenrost 15 liegt in bekannter Weise mit seiner hinteren Begrenzung 16 auf dem Fahrgestell 2 auf.

Fig. 2 zeigt das für die Ausführung gemäß Fig. 1 vorgesehene Halteteil 20 in räumlicher Darstellung. Das aus geräuschdämpfendem Kunststoff gefertigte Halteteil 20 besitzt von oben betrachtet einen rechteckigen Grundriß. Zwei Längswände 21 und damit der untere Bereich 22 sind zum Einfügen zwischen die Tragteile 8 bestimmt. Da die Tragteile 8 gewöhnlich aus starkem Runddraht gefertigt sind, krümmen sich die Längswände 21 mit ihrem oberen Abschnitt 23 kreisbogenabschnittförmig nach außen und passen sich der Querschnittsform der Tragteile 8 an. An den unteren Bereich 22 schließt ein oberer Bereich 24 an, der nach oben leicht bogenförmig abschließt und der eine horizontale Öffnung 25 zur schwenkbaren Aufnahme eines Drahtendes 17 des Bodenrostes 15 aufweist. Entgegengesetzt zur Öffnung 25 ist der obere Bereich 24 abgesetzt, so daß eine Auflagefläche 26 für einen Teil des Kopfes 28 eines Sicherungsmittels 27 geschaffen ist, wie in Fig. 3 näher beschrieben.

Fig. 3 zeigt einen Teil des vorderen Bereiches 4 des Fahrgestelles 2. Von der rechten Längsseite 5 des Fahrgestelles 2 führen in bekannter Weise zwei horizontal angeordnete und auf Abstand gehaltene Tragteile 8 zur gegenüberliegenden, nicht näher dargestellten Längsseite des Fahrgestelles 2. Die Enden der Tragteile 8 sind zwischen zwei übereinander angeordnete Längsstäbe 6 des Fahrgestelles 2 eingefügt und mit diesen verschweißt. Man erkennt ein Halteteil 20, das mit seinem unteren Bereich 22 in den durch die Tragteile 8 gebildeten Zwischenraum 9 eingefügt ist. Sichtbar ist nur der obere Bereich 24. In die Öffnung 25 des Halteteiles 20 ist ein Drahtende 17 des Bodenrostes 15 um eine waagrechte Achse 19 verschwenkbar eingesetzt. Die Öffnungen 25 der beiden Halteteile 20 befinden sich auf dieser waagrechten Achse 19. Die zur hinteren Begrenzung 16 des Bodenrostes 15 führenden Längsstäbe 18 sind höher angeordnet, als die Tragteile 8, so daß es nicht zu geräuschintensiven metallischen Berührungen zwischen dem Bodenrost 15 und den Tragteilen 8 kommt. Gleiches gilt auch für das nachfolgende Ausführungsbeispiel gemäß Fig. 4. In der Zeichnung erkennt man eine der beiden vorderen Fahrrollen 14, die an die Tragteile 8 angeschraubt sind. Zu diesem Zweck führt von oben ein Sicherungsmittel 27 in Form einer Schraube zwischen den Tragteilen 8 hindurch nach unten in die Fahrrolle 14. Im oberen Gehäuse der Fahrrolle 14 befindet sich eine Mutter, so daß die Fahrrolle 14 mit Hilfe des Sicherungsmittels 27 an einer an der Unterseite der Tragteile 8 angeordneten Scheibe 10 sich abstützend an die Tragteile 8 angeschraubt werden kann. In montiertem Zustand der vorderen Fahrrollen 14 befinden sich die Auflagefläche 26 des Halteteiles 20 unterhalb des Kopfes 28 des Sicherungsmittels 27, wobei die maßliche Abstimmung zwischen dem Halteteil 20, den Tragteilen 8 und dem Sicherungsmittel 27 so gewählt ist, daß das Halteteil 20 in montiertem Zustand der Fahrrolle 14 über die Auflagefläche 26 gegen die Tragteile 8 gedrückt wird. Die Halteteile 20 werden also mit den Tragteilen 8 verspannt. Beim Befestigen der vorderen Fahrrollen 14 werden somit in zweckmäßiger Weise auch gleichzeitig die Halteteile 20 und damit der Bodenrost 15 am Fahrgestell 2 befestigt.

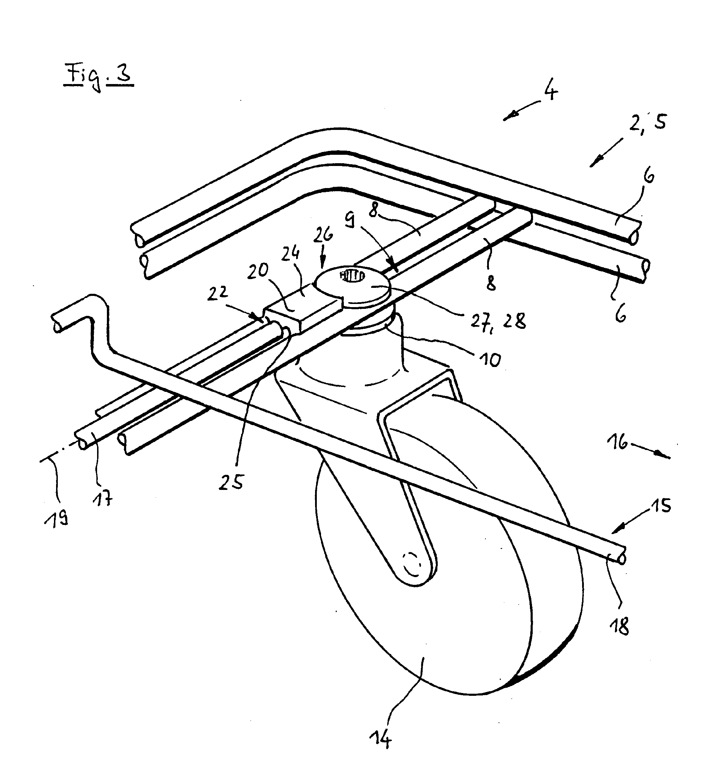

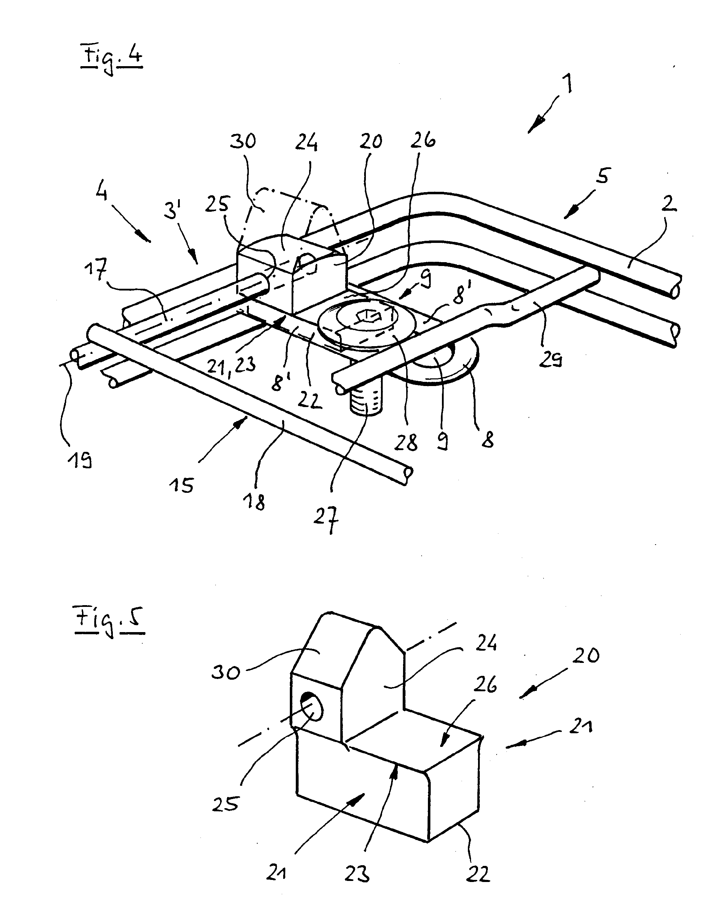

Ein weiteres Ausführungsbeispiel ist in Fig. 4 dargestellt. Die Zeichnung zeigt einen Teil des vorderen Bereiches 4 des Fahrgestelles 5. Anstelle der quer zur Schieberichtung angeordneten Tragteile 8, wie in den Figuren 1 und 3 gezeigt, sind nunmehr zwei waagrecht angeordnete, schlaufenförmige Tragteile 8 vorgesehen, die mit ihren in Schieberichtung weisenden Schenkeln 8' an der Stirnseite 3' des Fahrgestelles 2 befestigt sind. Ein die Längsseiten 5 des Fahrgestelles 2 verbindender, in der Zeichnung nur bruchstückhaft angeordneter Quersteg 29 ist ebenfalls mit den beiden Tragteilen 8 verbunden. Eine derartige Anordnung ist durch Einkaufswagen 1 der Anmelderin bekannt. Durch die Schenkel 8' ist ein Zwischenraum 9 gebildet, in welchen ein Tragteil 8 mit seinem unteren Bereich 22 von oben her in das Halteteil 20 eingesetzt ist. Die Gestalt des Halteteiles 20 ist in der Beschreibung zu Fig. 5 näher erläutert. Das Halteteil 20 liegt mit seinen Längswänden 21 an den Innenseiten der Schenkel 8' an. An den unteren Bereich 22 schließt ein oberer Bereich 24 an. Abgesetzt zum oberen Bereich 24 ist ebenfalls eine horizontal angeordnete Anlagefläche 26 für einen Teil des Kopfes 28 eines Sicherungsmittels 27 vorgesehen. Oberhalb der Anlagefläche 26 ist im oberen Bereich 24 und über dem Tragteil 8 angeordnet, eine quer zur Längserstreckung des Halteteiles 20 und somit quer zur Schieberichtung des Einkaufswagens 1 verlaufende Öffnung 25 vorgesehen, die zur Aufnahme eines Drahtendes 17 des Bodenrostes 15 bestimmt ist. Die Öffnungen 25 der beiden Halteteile 20 befinden sich auf der gemeinsamen, quer zur Schieberichtung verlaufenden waagrechten Achse 19. Somit läßt sich der Bodenrost 15 wie in Fig. 3 angeordnet und beschrieben, um die waagrechte Achse 19 begrenzt verschwenken. In der Zeichnung ist das Sicherungsmittel 27 angedeutet gezeichnet, das mit seinem Kopf 28 sowohl auf dem Tragteil 8, als auch auf dem Halteteil 20 aufsitzt, so daß das Halteteil 20 zwischen dem Kopf 28 des Sicherungsmittels 27 und dem Tragteil 8 eingespannt ist. Auf die Darstellung einer Fahrrolle 14 ist verzichtet worden. Diese liegt mit ihrem oberen Gehäuse an der Unterseite des Tragteiles 8 an und ist in gleicher Weise befestigt, wie unter Fig. 1 und 3 beschrieben.

Das in Fig. 4 in eingebautem Zustand gezeigte Halteteil 20 ist zum besseren Verständnis noch in Fig. 5 als Einzelteil dargestellt. Das bevorzugt aus geräuschdämpfendem Kunststoff gefertigte Halteteil 20 weist von oben betrachtet einen rechteckigen Grundriß auf. Die beiden Längswände 21 und damit der untere Bereich 22 sind zum Einfügen zwischen die Schenkel 8' eines Tragteiles 8 bestimmt. Wie bei dem in Fig. 2 beschriebenen Halteteil 20 krümmen sich auch bei diesem Halteteil 20 die Längswände 21 mit ihrem oberen Abschnitt 23 kreisbogenabschnittförmig nach außen und passen sich der Querschnittsform der Schenkel 8' eines Tragteiles 8 an, so daß das Halteteil 20 nicht durch den Zwischenraum 9 hindurchfallen kann. An den unteren Bereich 22 schließt der obere Bereich 24 an, der im Beispiel zu einem nach oben gerichteten Anschlag 30 für auf den Bodenrost 15 abzustellende Ware weiterentwickelt ist. Im Gegensatz zu dem in Fig. 2 erläuterten Halteteil 20 verläuft die zur Aufnahme eines Drahtendes 17 des Bodenrostes 15 bestimmte Öffnung 25 quer zur Längserstreckung des Halteteiles 20 und damit auch quer zur Schieberichtung des Einkaufswagens 1. Die Öffnung 25 ist als bevorzugt durchgehende Bohrung gestaltet, um "rechte" und "linke" Halteteile 20 zu vermeiden. Der obere Bereich 24 nimmt nur einen Teil des Grundrisses des Halteteiles 20 ein. Im Anschluß an den oberen Bereich 24 oder auch des Anschlages 30 ist die bereits in Fig. 2 und Fig. 4 beschriebene ebene und waagrechte Auflagefläche 26 vorgesehen, die zur Auflage eines Teils des Kopfes 28 eines Sicherungsmittels 27 bestimmt ist.

Es bleibt zu erwähnen, daß, ohne den Rahmen der Erfindung zu verlassen, im vorderen Bereich 4 anstelle von zwei Fahrrollen 14 lediglich eine Fahrrolle 14 vorgesehen sein kann. An der Form des Fahrgestelles 2 entsprechend Fig. 1 und 3 würde dies nichts ändern. Beim Ausführungsbeispiel gemäß Fig. 4 hingegen wäre demnach nur ein Tragteil 8, mittig angeordnet, vorzusehen. Ebenso ist es möglich, bei den in den Fig. 1 bis 3 beschriebenen Halteteilen 20 deren oberen Bereich 24 so weit nach oben zu verlängern, daß der obere Bereich 24 zusätzlich als Anschlag 30 für auf den Bodenrost 15 abgestellte Ware dient.

## Patentansprüche

1. Einkaufswagen (1) mit einem sich in Schieberichtung verjüngenden, mit vier Fahrrollen (14, 14') ausgestatteten Fahrgestell (2), das einen Bodenrost (15) trägt und über dem Bodenrost (15) ein mit dem Fahrgestell (2) ortsfest verbundener Korb (11) vorgesehen ist, der eine in das Korbinnere verschwenkbare Rückwand (12) aufweist und das Fahrgestell (2), der Bodenrost (15) sowie der Korb (11) so gestaltet sind, daß sich gleiche Einkaufswagen (1) platzsparend ineinanderschieben lassen und bei dem die vorderen Fahrrollen (14) an zwei im vorderen Bereich (4) des Fahrgestelles (2) angeordneten und mit der Stirnseite (3') oder den Längsseiten (5) des Fahrgestelles (2) verbundenen Tragteilen (8) mit Hilfe von Sicherungsmitteln (27) lösbar befestigt sind, wobei die zwischen den Tragteilen (8) hindurchgeführten Sicherungsmittel (27) mit ihrem Kopf (28) an den Tragteilen (8) aufliegen und wobei der mit seiner hinteren Begrenzung (16) auf dem Fahrgestell (2) aufliegende Bodenrost (15) im vorderen Bereich (4) des Fahrgestelles (2) so gelagert ist, daß er sich um eine quer zur Schieberichtung angeordnete waagrechte Achse (19) verschwenken läßt, dadurch **gekennzeichnet**, daß zwei mit je einer Öffnung (25) zur Aufnahme eines Teils des Bodenrostes (15) ausgestattete, aus geräuschdämpfendem Kunststoff gefertigte Halteteile (20) zwischen die Tragteile (8) eingefügt sind und jedes Halteteil (20) eine Anlagefläche (26) für einen Teil des Kopfes (28) eines Sicherungsmittels (27) aufweist und daß in montiertem Zustand der vorderen Fahrrollen (14) jedes Halteteil (20) zwischen dem Kopf (28) eines Sicherungsmittels (27) und zwischen einem oder zwei Tragteilen (8) eingespannt ist.

2. Einkaufswagen nach Anspruch 1, dadurch **gekennzeichnet**, daß die Halteteile (20) einen rechteckigen Grundriß aufweisen.

3. Einkaufswagen nach Anspruch 1 oder 2, dadurch **gekennzeichnet**, daß der obere Abschnitt (23) der Längswände (21) der Halteteile (20) beidseitig nach außen gekrümmt ist.

4. Einkaufswagen nach einem der Ansprüche 1 bis 3, dadurch **gekennzeichnet**, daß die Auflagefläche (26) der Halteteile (20) tiefer liegt, als deren oberer Bereich (24) und daß die Auflagefläche (26) entgegengesetzt zur Öffnung (25) angeordnet ist.

5. Einkaufswagen nach einem der Ansprüche 1 bis 3, dadurch **gekennzeichnet**, daß die Auflagefläche (26) der Halteteile (20) tiefer liegt, als deren oberer Bereich (24) und daß sich die Öffnung (25) im oberen Bereich (24) befindet und quer zur Längserstreckung des Halteteiles (20) und quer zur Schieberichtung des Einkaufswagens (1) verläuft.

6. Einkaufswagen nach einem der Ansprüche 1 bis 5, dadurch **gekennzeichnet**, daß sich die Öffnungen (25) zweier montierter Halteteile (20) auf der gemeinsamen waagrechten Achse (19) befinden.

7. Einkaufswagen nach einem der Ansprüche 1 bis 6, dadurch **gekennzeichnet**, daß die Öffnungen als Durchgangsbohrungen gestaltet sind.

8. Einkaufswagen nach einem der Ansprüche 1 bis 7, dadurch **gekennzeichnet,** daß der obere Bereich (24) der Halteteile (20) zu einem nach oben gerichteten Anschlag (30) weiterentwickelt ist.

9. Einkaufswagen nach einem der Ansprüche 1 bis 8, dadurch **gekennzeichnet**, daß die Längsstäbe (18) des Bodenrostes (15) höher angeordnet sind, als die Tragteile (8).

## Claims

1. A shopping trolley (1) having a wheel frame (2) which tapers in the pushing direction, is fitted with four casters (14, 14') and carries a bottom grid (15), and a basket (11) is provided which is connected in a fixed manner to the wheel frame (2) above the bottom grid (15) and has a rear wall (12) tiltable into the interior of the basket, and the wheel frame (2), the bottom grid (15) and the basket (11) are formed in such a way that like shopping trolleys (1) can be pushed one inside the other so as to save space and in which the front casters (14) on two supporting parts (8) arranged in the front region (4) of the wheel frame (2) and connected to the front end (3') or the longitudinal sides (5) of the wheel frame (2) are detachably mounted with the aid of securing means (27), wherein the head (28) of the securing means (27) guided between the supporting parts (8) rests on the supporting parts (8) and wherein the bottom grid (15), the rear limit (16) of which rests against the wheel frame (2), is mounted in the front region (4) of the wheel frame (2) in such a way that it can be tilted about a horizontal axis (19) arranged transversely to the pushing direction, characterised in that two holding parts (20) each provided with an opening (25) for receiving part of the bottom grid (15) and manufactured from sound-absorbing plastics are inserted between the supporting parts (8) and each holding part (20) has a contact surface (26) for part of the head (28) of a securing means (27), and in that when the front casters (14) are mounted, each holding part (20) is clamped between the head (28) of a securing means (27) and between one or two supporting parts (8).

2. A shopping trolley according to claim 1, characterised in that the holding parts (20) have a rectangular outline.

3. A shopping trolley according to claim 1 or 2, characterised in that the upper portion (23) of the longitudinal walls (21) of the holding parts (20) is curved outwards on both sides.

4. A shopping trolley according to any one of claims 1 to 3, characterised in that the contact surface (26) of the holding parts (20) is lower than the upper region (24) thereof and in that the contact surface (26) is arranged opposite the opening (25).

5. A shopping trolley according to any one of claims 1 to 3, characterised in that the contact surface (26) of the holding parts (20) is lower than the upper region (24) thereof and in that the opening (25) is in the upper region (24) and extends transversely to the longitudinal extent of the holding part (20) and extends transversely to the pushing direction of the shopping trolley (1).

6. A shopping trolley according to any one of claims 1 to 5, characterised in that the openings (25) of two mounted holding parts (20) are located on the common horizontal axis (19).

7. A shopping trolley according to any one of claims 1 to 6, characterised in that the openings are formed as through bores.

8. A shopping trolley according to any one of claims 1 to 7, characterised in that the upper region (24) of the holding parts (20) is further developed to form an upwardly extending stop (30).

9. A shopping trolley according to any one of claims 1 to 8, characterised in that the longitudinal bars (18) of the bottom grid (15) are arranged higher than the supporting parts (8).

## Revendications

1. Chariot à provisions (1) comprenant un châssis de roulement (2) qui se rétrécit dans la direction où l'on pousse le chariot, qui est équipé de quatre roulettes (14, 14') et qui porte une grille de fond (15), cependant qu'il est prévu, au-dessus de la grille de fond (15), un panier (11) qui est relié d'une manière fixe au châssis de roulement (2) et qui comporte une paroi arrière (12) susceptible de pivoter vers l'intérieur du panier, et que le châssis de roulement (2), la grille de fond (15) et le panier (11) sont conformés d'une manière telle que l'on puisse emboîter l'un dans l'autre des chariots à provisions identiques (1) en économisant de la place, et dans lequel les roulettes avant (14) sont fixées de façon amovible, à l'aide de moyens d'assujettissement (27), à deux pièces porteuses (8) qui sont disposées dans la région avant (4) du châssis de roulement (2) et qui sont reliées au côté frontal (3') du châssis de roulement (2) ou à ses côtés longitudinaux (5), et cependant que les moyens d'assujettissement (27) qui sont introduits entre les pièces porteuses (8) reposent par leur tête (28) sur les pièces porteuses (8), et que la grille de fond (15), laquelle porte par son extrémité arrière (16) sur le châssis de roulement (2), est montée dans la région avant (4) du châssis de roulement (2) d'une manière telle que l'on puisse la faire pivoter autour d'un axe horizontal (19) disposé transversalement par rapport à la direction où l'on pousse le chariot, caractérisé par le fait que deux pièces de maintien (20), lesquelles sont équipées chacune d'un orifice (25) destiné à recevoir une partie de la grille de fond (15) et sont fabriquées en une matière plastique amortissant le son, sont insérées entre les pièces porteuses (8), chaque pièce de maintien (20) présentant une surface d'appui (26) destinée à une partie de la tête (28) d'un moyen d'assujettissement (27), et par le fait qu'à l'état monté des roulettes avant (14), chaque pièce de maintien (20) est serrée entre la tête (28) d'un moyen d'assujettissement (27) et entre une ou deux pièces porteuses (8).

2. Chariot à provisions selon la revendication 1, caractérisé par le fait que les pièces de maintien (20) présentent une forme rectangulaire en projection horizontale.

3. Chariot à provisions selon la revendication 1 ou 2, caractérisé par le fait que la partie supérieure (23) des parois longitudinales (21) des pièces de maintien (20) est courbée vers l'extérieur des deux côtés.

4. Chariot à provisions selon l'une quelconque des revendications 1 à 3, caractérisé par le fait que la surface d'appui (26) des pièces de maintien (20) est située à un niveau inférieur à celui de la région supérieure (24) de celles-ci, et par le fait que la surface d'appui (26) est disposée à l'opposé de l'orifice (25).

5. Chariot à provisions selon l'une quelconque des revendications 1 à 3, caractérisé par le fait que la surface d'appui (26) des pièces de maintien (20) est située à un niveau inférieur à celui de la région supérieure (24) de celles-ci, et par le fait que l'orifice (25) se trouve dans la région supérieure (24) en s'étendant transversalement par rapport à la direction longitudinale de la pièce de maintien (20) et transversalement par rapport à la direction où l'on pousse le chariot à provisions (1).

6. Chariot à provisions selon l'une quelconque des revendications 1 à 5, caractérisé par le fait que les orifices (25) de deux pièces de maintien montées (20) se trouvent sur l'axe horizontal commun (19).

7. Chariot à provisions selon l'une quelconque des revendications 1 à 6, caractérisé par le fait que les orifices sont réalisés sous la forme de perçages traversants.

8. Chariot à provisions selon l'une quelconque des revendications 1 à 7, caractérisé par le fait que la région supérieure (?4) des pièces de maintien (20) se prolonge par une butée (30) qui est dirigée vers le haut.

9. Chariot à provisions selon l'une quelconque des revendications 1 à 8, caractérisé par le fait que les tiges longitudinales (18) de la grille de fond (15) sont disposées à un niveau supérieur à celui des pièces porteuses (8).
